# EUROPEAN PATENT SPECIFICATION

(11) **EP 4 072 225 B1**
(45) Date of publication and mention of the grant of the patent: **02.12.2026**
(21) Application number: 20896204.3
(22) Date of filing: 13.10.2020
(51) Int. Cl.: H04W 72/12, H04L 1/00

(54) **METHOD FOR DETERMINING INITIAL MCS VALUE, ELECTRONIC DEVICE, AND STORAGE MEDIUM**
VERFAHREN ZUR BESTIMMUNG DES ANFÄNGLICHEN MCS-WERTES, ELEKTRONISCHE VORRICHTUNG UND SPEICHERMEDIUM
PROCÉDÉ DE DÉTERMINATION D'UNE VALEUR MCS INITIALE, DISPOSITIF ÉLECTRONIQUE ET SUPPORT DE STOCKAGE

(30) Priority: 06.12.2019 CN 201911244259
(43) Date of publication of application: 12.10.2022
(73) Proprietor: ZTE Corporation, Shenzhen, Guangdong 518057 (CN)
(72) Inventor: ZHAN, Yong, Shenzhen, Guangdong 518057 (CN); SHI, Shangqi, Shenzhen, Guangdong 518057 (CN)
(74) Representative: Canzler & Bergmeier Patentanwälte Partnerschaft mbB
(86) International application number: PCT/CN2020/120668
(87) International publication number: WO 2021/109716

(56) References cited:
- EP-A1- 3 557 793
- CN-A- 101 415 208
- CN-A- 101 686 098
- CN-A- 101 989 870
- CN-A- 107 465 482
- DURAN A ET AL: "Self-Optimization Algorithm for Outer Loop Link Adaptation in LTE", IEEE COMMUNICATIONS LETTERS, IEEE SERVICE CENTER, PISCATAWAY, NJ, US, vol. 19, no. 11, 1 November 2015 (2015-11-01), pages 2005 - 2008, XP011589520, ISSN: 1089-7798, [retrieved on 20151109], DOI: 10.1109/LCOMM.2015.2477084
- QUALCOMM INCORPORATED: "Performance of Blind SLIC Receivers for NAICS Phase-2 Evaluations", 3GPP DRAFT; R4-135578 SLIC_PHASE2_REVISED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Riga, Latvia; 20131007 - 20131011, 10 October 2013 (2013-10-10), Mobile Competence Centre ; 650, route des Lucioles ; F-06921 Sophia-Antipolis Cedex ; France, XP050756143
- RENESAS MOBILE EUROPE LTD: "Simulation results for phase 2 evaluation", 3GPP DRAFT; R4-135488, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Riga, Latvia; 20131007 - 20131011, 30 September 2013 (2013-09-30), Mobile Competence Centre ; 650, route des Lucioles ; F-06921 Sophia-Antipolis Cedex ; France, XP050720838

## Description

The present application is based on and claims a priority from the Chinese patent application No. 201911244259.X filed on December 6, 2019.

### TECHNICAL FIELD

Embodiments of the present application relate to the field of communication technologies, and in particular, to a method for determining an initial MCS value, an electronic device, and a storage medium.

### BACKGROUND

In Long Term Evolution (LTE) and New Radio (NR) systems, Adaptive modulation and coding (AMC) is used to determine a modulation and coding scheme (MCS). The process of the AMC is a process of dynamically selecting an appropriate MCS according to changes in channel conditions. Typically, initial MCS of UE = inner loop MCS + initial outer loop MCS. Among them, the inner loop MCS is determined by real-time channel quality of the UE, while the initial outer loop MCS is obtained from experience and is typically a fixed value. In real-time scheduling, UE scheduled MCS = inner loop MCS + outer loop MCS. Among them, the inner loop MCS is still determined by real-time channel quality of the UE, while the outer loop MCS is gradually adjusted from the initial outer loop MCS according to block error rates (BLERs) of several times of data transmission by the UE.

The above related art has at least the following problems: in an actual system, there is typically a great difference between the initial MCS of the UE and the final converged scheduled MCS, which affects the BLER after the MCS value is finally determined, and which results in poor user experience. The paper "Self-Optimization Algorithm for Outer Loop Link Adaptation in LTE", by A. Duran et Al, IEEE COMMUNICATIONS LETTERS, 01.11.2015, discloses how to select the initial value of the OLLA offset based on histograms of OLLA offsets corresponding to large activity connections, which are aggregated into a single histogram. Such histograms consider OLLA offsets being divided into N intervals covering the range of possible values. The optimized initial OLLA offset is computed as the median value of the aggregated histogram.

### SUMMARY

The present invention relates to a method for determining an initial MCS value, an electronic device, and a storage medium, as defined by the attached claims.

### BRIEF DESCRIPTION OF DRAWINGS

One or more embodiments are illustrated through corresponding figures in the accompanying drawings, but such illustration does not constitute any limitation to the embodiments. Throughout the drawings, elements having like reference numerals represent like elements, and the drawings are not to be construed as limiting in scale unless otherwise specified.
FIG. 1 is a flowchart of a method for determining an initial MCS value according to a first implementation of the present application;
FIG. 2 is a flowchart of acquiring distribution probabilities of different outer loop MCS values of the N measurement parameters in each interval according to the first implementation of the present application;
FIG. 3 is a flowchart of a method for determining an initial MCS value according to a second implementation of the present application; and
FIG. 4 is a schematic structural diagram of an electronic device according to a third implementation of the present application.

### DETAIL DESCRIPTION OF EMBODIMENTS

To make the objects, technical solutions and advantages of the embodiments of the present application clearer, implementations of the present application will be described in detail below with reference to the accompanying drawings. However, it will be appreciated by those of ordinary skill in the art that numerous technical details are set forth in various implementations of the present application to provide a better understanding of the present application. However, the technical solutions claimed in the present application can be implemented without these technical details or based on various changes and modifications based on the following implementations. The following embodiments are divided for convenience of description, and should not constitute any limitation to the specific implementation of the present application, and the embodiments may be mutually incorporated and referred to without contradiction.

An objective of the implementations of the present application is to provide a method for determining an initial MCS value, an electronic device, and a storage medium, which can determine a more appropriate initial MCS value in an adaptive modulation and coding (AMC) process, thereby achieving the purpose of speeding up convergence of a UE scheduled MCS, and improving a spectral efficiency of the system.

A first implementation of the present application relates to a method for determining an initial MCS value. In this implementation, intervals where N measurement parameters of a terminal affecting a modulation and coding scheme (MCS) value are currently located are determined. An interval of each measurement parameter is obtained through interval division of a possible value range of the measurement parameter in advance, and n is a natural number greater than 0. Based on the intervals where the N measurement parameters are currently located and pre-counted distribution probabilities of different outer loop MCS values of the N measurement parameters in each interval, an initial outer loop MCS value of the terminal is calculated in real time. Based on the initial outer loop MCS value and an inner loop MCS value of the terminal, an initial MCS value of the terminal is determined.

The detailed implementation of the method for determining an initial MCS value of the present implementation will be specifically described below, and the following description is provided merely for facilitating understanding of the implementation details and is not necessary for implementing the present solution.

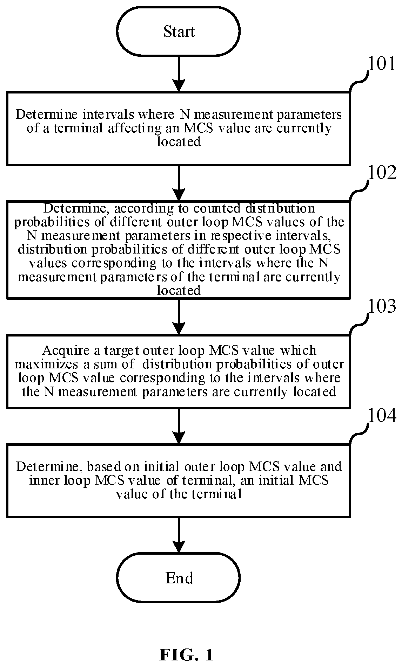

As shown in FIG. 1, the method for determining an initial MCS value according to the present implementation includes the following operations 101 to 104.

At operation 101, determining intervals where N measurement parameters of a terminal affecting a modulation and coding scheme (MCS) value are currently located. An interval of each measurement parameter is obtained through interval division of a possible value range of the measurement parameter in advance, and N is a natural number greater than 0.

Specifically, in this implementation, the measurement parameters affecting the MCS value include, but are not limited to: channel quality indication, a sounding reference signal, a signal to interference-plus-noise ratio, or beam forming (BF). The value range of each MCS value measurement parameter is divided into several intervals in advance, and the division method includes, but is not limited to, uniformly dividing the value range according to the system accuracy requirements. When a base station starts to determine the MCS value of a UE, at least one or any combination of the parameters is selected as the measurement parameter(s) that affect the MCS value, and then, an interval of the current value of the selected parameter(s) is determined. Assuming that *i* ∈ {0, ... , *I* - 1} represents an index of relevant MCS value measurement parameters, where *I* represents a number of MCS value measurement parameters. Meanwhile, assuming that *kᵢ* ∈ {0, *..., Kᵢ -* 1} represents an index of value intervals of a MCS value measurement parameter *i,* where *Kᵢ* represents a number of value intervals of the MCS value measurement parameter *i.*

In an example, CQI is taken as the unique MCS value measurement parameter, and it is assumed that the value range of CQI, (0, 1, 2, 3, 4, 5, 6, 7, 8, 9, 10, 11, 12, 13, 14, 15), is divided into four intervals, then *k*₀ ∈ {0, ...,3}, *K*₀ = 10. That is, the specific division method includes: when *CQI* ∈ {0,1,2,3}, the index value *k*₀ = 0; when *CQI* ∈ {4,5,6,7}, the index value *k*₀ = 1; when *CQI* ∈ {8,9,10,11}, the index value k₀ = 2; and when *CQI* ∈ {12,13,14,15,}, the index value *k*₀ = 3.

In another example, the selected MCS measurement parameters include: CQI and SRS-SINR. Then i ∈ {0,1} represents an index of MCS value measurement parameters, and *I* = 2. Assuming that *k*₀ ∈ {0, ...,3}, then *K*₀ = 4. The specific division of intervals are as follows: *k*₀ = 0, i.e., when *CQI* ∈ {0,1,2,3}, *k*₀ = 1, i.e., when *CQI* ∈ {4,5,6,7}, *k*₀ = 2, i.e., when *CQI ∈* {8,9,10,11}, and *k*₀ = 3, i.e., when *CQI* ∈ {12,13,14,15}. Assuming that *k*₁ ∈ {0, ...,3}, then *K*₁ = 4. The specific division of intervals are as follows: *k*₁ = 0, i.e., when *SRS - SINR* ≤ *10dB, k*₁ = 1, i.e., when 10*dB* < *SRS - SINR* ≤ *15dB, k*₁ = 2, i.e., when 15*dB* < *SRS - SINR* ≤ 20*dB,* and *k*₁ = 3, i.e., when *SRS - SINR > 20dB.*

At operation 102, determining, according to the counted distribution probabilities of different outer loop MCS values of the N measurement parameters in respective intervals, distribution probabilities of different outer loop MCS values corresponding to the intervals where the N measurement parameters of the terminal are currently located.

Specifically, the base station records in advance and counts historical data of all MCS values scheduled by user equipment UEs within a certain time period, and calculates a distribution probability of each measurement parameter in each interval of the value range.

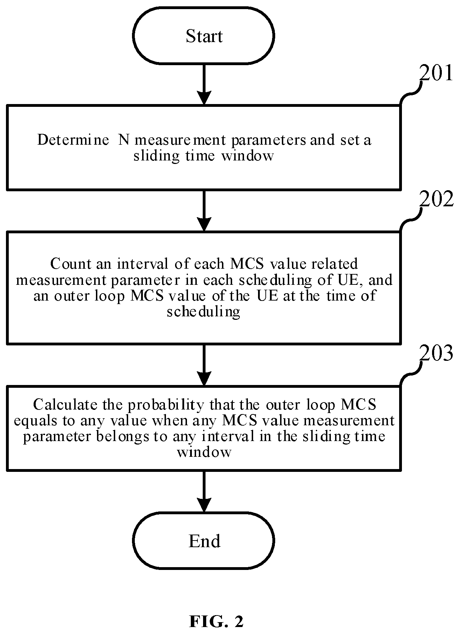

In this implementation, the method for acquiring the distribution probabilities of different outer loop MCS values of the N measurement parameters in each interval is shown in FIG. 2, and includes the following operations 201 to 203.

At operation 201, determining N measurement parameters and setting a sliding time window.

Specifically, the measurement parameters for the current UE scheduled MCS process at the base station are selected, and a time length of the sliding time window is set. The length of the sliding time window is typically set empirically, and an appropriate value T is taken according to the specific operating condition of the base station. For example, a base station with a larger number of UEs may be set to a smaller value T, while a base station with a smaller number of UEs may be set to a larger value T. A too long time-length may lead to a great amount of sample data, and since the base station has different working pressures in different time periods, sample data farther from the current time are not good references, and may affect the finally determined initial MCS value. In contrast, a too short time-length may lead to a few amount of sample data, resulting in a relatively low confidence of the counted distribution probabilities, and also affecting the finally determined initial MCS value.

At operation 202, counting an interval of each MCS value measurement parameter in each scheduling of each UE, and an outer loop MCS value of the UE at the scheduling time.

Specifically, the length of the sliding time window is T, and for the current time t, the sliding time window represents a time period from time *t - T* to time *t -* 1. Data about the MCS being scheduled by all UEs recorded in the system during this time period is read, and an interval of each MCS value measurement parameter in each scheduling of each UE, and an outer loop MCS value of the UE at that time are counted. Finally, the probability that the outer loop MCS equals to any value when any MCS value measurement parameter belongs to any interval in the current sliding time window is calculated.

At operation 203, calculating the probability that the outer loop MCS equals to any value when any MCS value measurement parameter belongs to any interval in the sliding time window.

Specifically, in this implementation, assuming that *t* represents the current time of the MCS determination process, *m* represents a value of the outer loop MCS, ${N}_{{k}_{i}}^{t , i}$ represents a number of times where, from time *t - T* to time *t* - 1, i.e., within the sliding time window, the UE scheduled MCS measurement parameter i belongs to the interval *kᵢ,* ${N}_{{k}_{i} , m}^{t , i}$ represents a number of times where, within the sliding time window, the UE scheduled MCS measurement parameter *i* belongs to the interval *kᵢ,* and the outer loop MCS equals to *m*. Within the sliding time window, i.e., from *t - T* to *t* - 1, ${N}_{{k}_{i}}^{t , i}$ and ${N}_{{k}_{i} , m}^{t , i}$ are counted. Assuming that ${P}_{{k}_{i} , m}^{t , i}$ represents a counted probability where, from time *t - T* to time *t* - 1, when the scheduled UE MCS value measurement parameter i belongs to the interval *kᵢ,* and the outer loop MCS equals to *m,* that is, ${P}_{{k}_{i} , m}^{t , i} = \frac{{N}_{{k}_{i} , m}^{t , i}}{{N}_{{k}_{i}}^{t , i}}$*.* Then, within the sliding time window, i.e., within the time period from *t - T* to *t - 1,* ${P}_{{k}_{i} , m}^{t , i}$ is calculated. For all times *t,* all measurement parameters *i,* and all values *kᵢ* of all measurement parameters, *kᵢ,* ${\sum }_{m} {P}_{{k}_{i} , m}^{t , i} = 1$, that is, *Vt, i, kᵢ,* ${\sum }_{m} {P}_{{k}_{i} , m}^{t , i} = 1$.

Taking the case where CQI is the unique MCS value measurement parameter as an example, the measurement parameter index value of CQI is 0. Given that the sliding time window has a time length T=200000ms, and the current time is *t*, the number of times ${N}_{{k}_{0}}^{t , 0}$ where, within the time period from *t - T* to *t -* 1, the UE scheduled MCS measurement parameter *i* belongs to the interval *kᵢ,* and the number of times ${N}_{{k}_{0} , m}^{t , 0}$, where the UE scheduled MCS measurement parameter *i* belongs to the interval *kᵢ,* and the outer loop MCS equals to *m.* Assuming that the counted results are as follows: $\begin{matrix}{N}_{{k}_{0}}^{t , 0} = {\left[{N}_{0}^{t , 0} {N}_{1}^{t , 0} {N}_{2}^{t , 0} {N}_{3}^{t , 0}\right]}^{T} = \\ {\left[100,000 300,000 800,000 200,000\right]}^{T} ,\end{matrix}$ $\begin{matrix}{N}_{{k}_{0} , m}^{t , 0} = \left[\begin{matrix}{N}_{0 , - 5}^{t , 0} & {N}_{0 , - 4}^{t , 0} & {N}_{0 , - 3}^{t , 0} & {N}_{0 , - 2}^{t , 0} & {N}_{0 , - 1}^{t , 0} & {N}_{0 , 0}^{t , 0} & {N}_{0 , 1}^{t , 0} & {N}_{0 , 2}^{t , 0} \\ {N}_{1 , - 5}^{t , 0} & {N}_{1 , - 4}^{t , 0} & {N}_{1 , - 3}^{t , 0} & {N}_{1 , - 2}^{t , 0} & {N}_{1 , - 1}^{t , 0} & {N}_{1 , 0}^{t , 0} & {N}_{1 , 1}^{t , 0} & {N}_{1 , 2}^{t , 0} \\ {N}_{2 , - 5}^{t , 0} & {N}_{2 , - 4}^{t , 0} & {N}_{2 , - 3}^{t , 0} & {N}_{2 , - 2}^{t , 0} & {N}_{2 , - 1}^{t , 0} & {N}_{2 , 0}^{t , 0} & {N}_{2 , 1}^{t , 0} & {N}_{2 , 2}^{t , 0} \\ {N}_{3 , - 5}^{t , 0} & {N}_{3 , - 4}^{t , 0} & {N}_{3 , - 3}^{t , 0} & {N}_{3 , - 2}^{t , 0} & {N}_{3 , - 1}^{t , 0} & {N}_{3 , 0}^{t , 0} & {N}_{3 , 1}^{t , 0} & {N}_{3 , 2}^{t , 0}\end{matrix}\right] = \\ \left[\begin{matrix}0 & 10 , 000 & 20 , 000 & 40 , 000 & 20 , 000 & 10 , 000 & 0 & 0 \\ 0 & 50 , 000 & 100 , 000 & 50 , 000 & 50 , 000 & 30 , 000 & 20 , 000 & 0 \\ 50 , 000 & 100 , 000 & 250 , 000 & 200 , 000 & 100 , 000 & 50 , 000 & 30 , 000 & 20 , 000 \\ 0 & 0 & 0 & 50 , 000 & 120 , 000 & 20 , 000 & 10 , 000 & 0\end{matrix}\right]\end{matrix}$

It is obtained after calculation that within the sliding time window, ${P}_{{k}_{0} , m}^{t , 0} = \left[\begin{matrix}{P}_{0 , - 5}^{t , 0} & {P}_{0 , - 4}^{t , 0} & {P}_{0 , - 3}^{t , 0} & {P}_{0 , - 2}^{t , 0} & {P}_{0 , - 1}^{t , 0} & {P}_{0 , 0}^{t , 0} & {P}_{0 , 1}^{t , 0} & {P}_{0 , 2}^{t , 0} \\ {P}_{1 , - 5}^{t , 0} & {P}_{1 , - 4}^{t , 0} & {P}_{1 , - 3}^{t , 0} & {P}_{1 , - 2}^{t , 0} & {P}_{1 , - 1}^{t , 0} & {P}_{1 , 0}^{t , 0} & {P}_{1 , 1}^{t , 0} & {P}_{1 , 2}^{t , 0} \\ {P}_{2 , - 5}^{t , 0} & {P}_{2 , - 4}^{t , 0} & {P}_{2 , - 3}^{t , 0} & {P}_{2 , - 2}^{t , 0} & {P}_{2 , - 1}^{t , 0} & {P}_{2 , 0}^{t , 0} & {P}_{2 , 1}^{t , 0} & {P}_{2 , 2}^{t , 0} \\ {P}_{3 , - 5}^{t , 0} & {P}_{3 , - 4}^{t , 0} & {P}_{3 , - 3}^{t , 0} & {P}_{3 , - 2}^{t , 0} & {P}_{3 , - 1}^{t , 0} & {P}_{3 , 0}^{t , 0} & {P}_{3 , 1}^{t , 0} & {P}_{3 , 2}^{t , 0}\end{matrix}\right]$ $= \left[\begin{matrix}0 & 10 % & 20 % & 40 % & 20 % & 10 % & 0 & 0 \\ 0 & 16.67 % & 33.33 % & 16.67 % & 16.67 % & 10 % & 6.67 % & 0 \\ 6.25 % & 12.5 % & 31.25 % & 25 % & 12.5 % & 6.25 % & 3.75 % & 2.5 % \\ 0 & 0 & 0 & 25 % & 60 % & 10 % & 5 % & 0\end{matrix}\right]$.

Taking the case where the measurement parameters include CQI and SRS-SINR as an example, the measurement parameter index value of CQI is 0, and the index value of SRS-SINR is 1. Given that T=200000ms, within the sliding time window, i.e., the time period from *t - T* to *t* - 1, ${N}_{{k}_{i}}^{t , i}$ and ${N}_{{k}_{i} , m}^{t , i}$ are counted. Assuming that ${N}_{{k}_{0}}^{t , 0} = {\left[{N}_{0}^{t , 0} {N}_{1}^{t , 0} {N}_{2}^{t , 0} {N}_{3}^{t , 0}\right]}^{T} =$ [100,000 300,000 800,000 200,000]*^{T}*, $\begin{matrix}{N}_{{k}_{0} , m}^{t , 0} = \left[\begin{matrix}{N}_{0 , - 5}^{t , 0} & {N}_{0 , - 4}^{t , 0} & {N}_{0 , - 3}^{t , 0} & {N}_{0 , - 2}^{t , 0} & {N}_{0 , - 1}^{t , 0} & {N}_{0 , 0}^{t , 0} & {N}_{0 , 1}^{t , 0} & {N}_{0 , 2}^{t , 0} \\ {N}_{1 , - 5}^{t , 0} & {N}_{1 , - 4}^{t , 0} & {N}_{1 , - 3}^{t , 0} & {N}_{1 , - 2}^{t , 0} & {N}_{1 , - 1}^{t , 0} & {N}_{1 , 0}^{t , 0} & {N}_{1 , 1}^{t , 0} & {N}_{1 , 2}^{t , 0} \\ {N}_{2 , - 5}^{t , 0} & {N}_{2 , - 4}^{t , 0} & {N}_{2 , - 3}^{t , 0} & {N}_{2 , - 2}^{t , 0} & {N}_{2 , - 1}^{t , 0} & {N}_{2 , 0}^{t , 0} & {N}_{2 , 1}^{t , 0} & {N}_{2 , 2}^{t , 0} \\ {N}_{3 , - 5}^{t , 0} & {N}_{3 , - 4}^{t , 0} & {N}_{3 , - 3}^{t , 0} & {N}_{3 , - 2}^{t , 0} & {N}_{3 , - 1}^{t , 0} & {N}_{3 , 0}^{t , 0} & {N}_{3 , 1}^{t , 0} & {N}_{3 , 2}^{t , 0}\end{matrix}\right] \\ = \left[\begin{matrix}0 & 10 , 000 & 20 , 000 & 40 , 000 & 20 , 000 & 10 , 000 & 0 & 0 \\ 0 & 50 , 000 & 100 , 000 & 50 , 000 & 50 , 000 & 30 , 000 & 20 , 000 & 0 \\ 50 , 000 & 100 , 000 & 250 , 000 & 200 , 000 & 100 , 000 & 50 , 000 & 30 , 000 & 20 , 000 \\ 0 & 0 & 0 & 50 , 000 & 120 , 000 & 20 , 000 & 10 , 000 & 0\end{matrix}\right] ,\end{matrix}$ ${N}_{{k}_{1}}^{t , 1} = {\left[{N}_{0}^{t , 1} {N}_{1}^{t , 1} {N}_{2}^{t , 1} {N}_{3}^{t , 1}\right]}^{T} = {\left[100,000 320,000 530,000 450,000\right]}^{T}$ $\begin{matrix}{N}_{{k}_{1} , m}^{t , 1} = \left[\begin{matrix}{N}_{0 , - 5}^{t , 1} & {N}_{0 , - 4}^{t , 1} & {N}_{0 , - 3}^{t , 1} & {N}_{0 , - 2}^{t , 1} & {N}_{0 , - 1}^{t , 1} & {N}_{0 , 0}^{t , 1} & {N}_{0 , 1}^{t , 1} & {N}_{0 , 2}^{t , 1} \\ {N}_{1 , - 5}^{t , 1} & {N}_{1 , - 4}^{t , 1} & {N}_{1 , - 3}^{t , 1} & {N}_{1 , - 2}^{t , 1} & {N}_{1 , - 1}^{t , 1} & {N}_{1 , 0}^{t , 1} & {N}_{1 , 1}^{t , 1} & {N}_{1 , 2}^{t , 1} \\ {N}_{2 , - 5}^{t , 1} & {N}_{2 , - 4}^{t , 1} & {N}_{2 , - 3}^{t , 1} & {N}_{2 , - 2}^{t , 1} & {N}_{2 , - 1}^{t , 1} & {N}_{2 , 0}^{t , 1} & {N}_{2 , 1}^{t , 1} & {N}_{2 , 2}^{t , 1} \\ {N}_{3 , - 5}^{t , 1} & {N}_{3 , - 4}^{t , 1} & {N}_{3 , - 3}^{t , 1} & {N}_{3 , - 2}^{t , 1} & {N}_{3 , - 1}^{t , 1} & {N}_{3 , 0}^{t , 1} & {N}_{3 , 1}^{t , 1} & {N}_{3 , 2}^{t , 1}\end{matrix}\right] = \\ \left[\begin{matrix}0 & 10 , 000 & 20 , 000 & 20 , 000 & 30 , 000 & 10 , 000 & 10 , 000 & 0 \\ 50 , 000 & 150 , 000 & 50 , 000 & 20 , 000 & 10 , 000 & 10 , 000 & 10 , 000 & 20 , 000 \\ 0 & 0 & 150 , 000 & 200 , 000 & 100 , 000 & 50 , 000 & 30 , 000 & 0 \\ 0 & 0 & 150 , 000 & 100 , 000 & 150 , 000 & 40 , 000 & 10 , 000 & 0\end{matrix}\right] ,\end{matrix}$

It is obtained after calculation that within the sliding time window that $\begin{matrix}{P}_{{k}_{0} , m}^{t , 0} = \left[\begin{matrix}{P}_{0 , - 5}^{t , 0} & {P}_{0 , - 4}^{t , 0} & {P}_{0 , - 3}^{t , 0} & {P}_{0 , - 2}^{t , 0} & {P}_{0 , - 1}^{t , 0} & {P}_{0 , 0}^{t , 0} & {P}_{0 , 1}^{t , 0} & {P}_{0 , 2}^{t , 0} \\ {P}_{1 , - 5}^{t , 0} & {P}_{1 , - 4}^{t , 0} & {P}_{1 , - 3}^{t , 0} & {P}_{1 , - 2}^{t , 0} & {P}_{1 , - 1}^{t , 0} & {P}_{1 , 0}^{t , 0} & {P}_{1 , 1}^{t , 0} & {P}_{1 , 2}^{t , 0} \\ {P}_{2 , - 5}^{t , 0} & {P}_{2 , - 4}^{t , 0} & {P}_{2 , - 3}^{t , 0} & {P}_{2 , - 2}^{t , 0} & {P}_{2 , - 1}^{t , 0} & {P}_{2 , 0}^{t , 0} & {P}_{2 , 1}^{t , 0} & {P}_{2 , 2}^{t , 0} \\ {P}_{3 , - 5}^{t , 0} & {P}_{3 , - 4}^{t , 0} & {P}_{3 , - 3}^{t , 0} & {P}_{3 , - 2}^{t , 0} & {P}_{3 , - 1}^{t , 0} & {P}_{3 , 0}^{t , 0} & {P}_{3 , 1}^{t , 0} & {P}_{3 , 2}^{t , 0}\end{matrix}\right] \\ = \left[\begin{matrix}0 & 10 % & 20 % & 40 % & 20 % & 10 % & 0 & 0 \\ 0 & 16.67 % & 33.33 % & 16.67 % & 16.67 % & 10 % & 6.67 % & 0 \\ 6.25 % & 12.5 % & 31.25 % & 25 % & 12.5 % & 6.25 % & 3.75 % & 2.5 % \\ 0 & 0 & 0 & 25 % & 60 % & 10 % & 5 % & 0\end{matrix}\right] ;\end{matrix}$ $\begin{matrix}{P}_{{k}_{1} , m}^{t , 1} = \left[\begin{matrix}{P}_{0 , - 5}^{t , 1} & {P}_{0 , - 4}^{t , 1} & {P}_{0 , - 3}^{t , 1} & {P}_{0 , - 2}^{t , 1} & {P}_{0 , - 1}^{t , 1} & {P}_{0 , 0}^{t , 1} & {P}_{0 , 1}^{t , 1} & {P}_{0 , 2}^{t , 1} \\ {P}_{1 , - 5}^{t , 1} & {P}_{1 , - 4}^{t , 1} & {P}_{1 , - 3}^{t , 1} & {P}_{1 , - 2}^{t , 1} & {P}_{1 , - 1}^{t , 1} & {P}_{1 , 0}^{t , 1} & {P}_{1 , 1}^{t , 1} & {P}_{1 , 2}^{t , 1} \\ {P}_{2 , - 5}^{t , 1} & {P}_{2 , - 4}^{t , 1} & {P}_{2 , - 3}^{t , 1} & {P}_{2 , - 2}^{t , 1} & {P}_{2 , - 1}^{t , 1} & {P}_{2 , 0}^{t , 1} & {P}_{2 , 1}^{t , 1} & {P}_{2 , 2}^{t , 1} \\ {P}_{3 , - 5}^{t , 1} & {P}_{3 , - 4}^{t , 1} & {P}_{3 , - 3}^{t , 1} & {P}_{3 , - 2}^{t , 1} & {P}_{3 , - 1}^{t , 1} & {P}_{3 , 0}^{t , 1} & {P}_{3 , 1}^{t , 1} & {P}_{3 , 2}^{t , 1}\end{matrix}\right] \\ = \left[\begin{matrix}0 & 10 % & 20 % & 20 % & 30 % & 10 % & 10 % & 0 \\ 15.625 % & 46.875 % & 15.625 % & 6.25 % & 3.125 % & 3.125 % & 3.125 % & 6.25 % \\ 0 & 0 & 28.3 % & 37.74 % & 18.87 % & 9.43 % & 5.66 % & 0 \\ 0 & 0 & 33.33 % & 22.22 % & 33.33 % & 8.89 % & 2.22 % & 0\end{matrix}\right]\end{matrix}$

At operation 103, acquiring a target outer loop MCS value which maximizes a sum of distribution probabilities of the outer loop MCS values corresponding to the intervals where the N measurement parameters are currently located.

Specifically, the base station firstly obtains values of the measurement parameters for the current MCS value determination process, and then determines distribution probabilities of different outer loop MCS values corresponding to the intervals where the N measurement parameters of the current terminal are currently located. The distribution probabilities corresponding to the respective MCS values are summed to acquire a target outer loop MCS value which enables a maximum sum of distribution probabilities of outer loop MCS values corresponding to the intervals where the N measurement parameters are currently located. Then, the counted probabilities of different outer loop MCS values corresponding to the intervals of each MCS value related measurement parameter of the UE are obtained. An outer loop MCS value which can maximize a sum of weighted probabilities of the intervals where all MCS value related measurement parameters of the UE are located is calculated, and taken as an initial outer loop MCS of the UE. The weight used for weighting may be simply set to 1 divided by the number of the MCS value related measurement parameters, or the number of samples in the interval where an MCS value related measurement parameter arbitrarily specified by the UE is located divided by a total number of samples in the intervals where all MCS value related measurement parameters of the UE are located. Finally, the inner loop MCS value calculated in real time is combined to obtain the initial MCS of the UE.

By learning historical scheduling samples within the sliding time window by the system, a target outer loop MCS value which enables the maximum sum of distribution probabilities of the outer loop MCS values corresponding to the intervals where the N measurement parameters are currently located is used so that a more appropriate initial MCS is selected, thereby achieving the purpose of speeding up convergence of a UE scheduled MCS, and improving a spectral efficiency of the system.

When N=1, the target outer loop MCS value corresponding to an element with the largest probability in a unique distribution probability matrix of measurement parameters is directly taken as the initial outer loop MCS value. When N>1, N matrixes ${P}_{{k}_{0} , m}^{t , 0}$ are summed to obtain a summed matrix ${\sum }_{i} {P}_{{UE}_{u}^{t , i} , m}^{t , i}$, and then the target outer loop MCS value corresponding to an element with the largest value in the summed matrix is taken as the initial outer loop MCS value. Assuming that *u* represents the UE index, ${UE}_{u}^{t , i}$ represents an interval where the UE *u*MCS value measurement parameter *i* is located at the current time. At time *t,* it is calculated in real time that the UE *u* initial outer loop $MCS = arg {max}_{m} \left({\sum }_{i} \left({P}_{{UE}_{u}^{t , i} , m}^{t , i}\right)\right)$, where ${w}_{{UE}_{u}^{t , i}}^{t , i}$ represents a weight assigned to the UE MCS value measurement parameter *i* with an identifier *u* at time *t.* In addition, *Vt, u*, $∀ t , u , {\sum }_{i} {w}_{{UE}_{u}^{t , i}}^{t , i} = 1$. The value of ${w}_{{UE}_{u}^{t , i}}^{t , i}$ may be manually adjusted through a parameter interface, or may be automatically calculated based on certain rules. For example, it may be assumed that ${w}_{{UE}_{u}^{t , i}}^{t , i} = \frac{1}{I}$, or ∀*t*, *i*, *u*, ${w}_{{UE}_{u}^{t , i}}^{t , i} = \frac{{N}_{{UE}_{u}^{t , i}}^{t , i}}{{\sum }_{i} {N}_{{UE}_{u}^{t , i}}^{t , i}}$.

Taking the case where CQI is the unique MCS value measurement parameter as an example, it is assumed that the UE with an identifier 0 has CQI=10 at time t, i.e., ${UE}_{0}^{t , 0} = 2$. Then, it is assumed that ∀*t, i, u,* $u , {w}_{{UE}_{u}^{t , i}}^{t , i} = \frac{1}{I} = 1 . arg {max}_{m} \left({\sum }_{i = 0}^{0} \left({P}_{{UE}_{0}^{t , i} , m}^{t , i}\right)\right) = - 3$ , that is, assuming that UE 0 has an initial outer loop MCS -3, and it is calculated that UE 0 has an inner loop MCS 15, then the UE 0 has an initial MCS 12. Assuming that at time *t*, UE 1 has CQI=14, i.e., ${UE}_{1}^{t , 0} = 3 . arg {max}_{m} \left({\sum }_{i = 0}^{0} \left({P}_{{UE}_{1}^{t , i} , m}^{t , i}\right)\right) = - 1$, that is, assuming that UE 1 has an initial outer loop MCS -1, and it is calculated that UE 1 has an inner loop MCS 24, then the UE 1 has an initial MCS 23.

Taking the case where the measurement parameters include CQI and SRS_SINR as an example, it is assumed that the UE with an identifier 0 has CQI=10 at time *t,* i.e., ${UE}_{0}^{t , 0} = 2$; SRS_SINR=16dB, i.e., ${UE}_{0}^{t , 1} = 2$. Assuming that ∀*t*, *i*, *u*, ${w}_{{UE}_{u}^{t , i}}^{t , i} = \frac{{N}_{{UE}_{u}^{t , i}}^{t , i}}{{\sum }_{i} {N}_{{UE}_{u}^{t , i}}^{t , i}}$, then ${w}_{{UE}_{0}^{t , 0}}^{t , 0} = \frac{{N}_{2}^{t , 0}}{\left({N}_{2}^{t , 0}+{N}_{2}^{t , 1}\right)} =$ $0.6015 , {w}_{{UE}_{0}^{t , 1}}^{t , 1} = \frac{{N}_{2}^{t , 1}}{\left({N}_{2}^{t , 0}+{N}_{2}^{t , 1}\right)} = 0.3985 . arg {max}_{m} \left({\sum }_{i = 0}^{1} \left({P}_{{UE}_{0}^{t , i} , m}^{t , i}\cdot {w}_{{UE}_{0}^{t , i}}^{t , i}\right)\right) = - 2$ , that is, it is assumed that the UE with an identifier 0 has an initial outer loop MCS -2, and it is calculated that the UE with the identifier 0 has an inner loop MCS 15, then the UE with the identifier 0 has an initial MCS 13. It is assumed that the UE with an identifier 1 has CQI= 14 at time *t,* i.e., ${UE}_{1}^{t , 0} = 3$; SRS-SINR=19dB, i.e., ${UE}_{1}^{t , 1} = 2$. At this time, ${w}_{{UE}_{1}^{t , 0}}^{t , 0} = \frac{{N}_{3}^{t , 0}}{\left({N}_{3}^{t , 0}+{N}_{2}^{t , 1}\right)} = 0.274$ , and ${w}_{{UE}_{1}^{t , 1}}^{t , 1} = \frac{{N}_{3}^{t , 1}}{\left({N}_{3}^{t , 0}+{N}_{2}^{t , 1}\right)} = 0.726 . arg {max}_{m} \left({\sum }_{i = 0}^{1} \left({P}_{{UE}_{1}^{t , 1} , m}^{t , i}\cdot {w}_{{UE}_{1}^{t , i}}^{t , i}\right)\right) = - 2$ , where ${w}_{{UE}_{1}^{t , i}}^{t , i} = 0.5 , {w}_{{UE}_{2}^{t , i}}^{t , i} = 0.5$, i.e., that is, assuming that UE 1 has an initial outer loop MCS -2, and it is calculated that the UE with the identifier 1 has an inner loop MCS 24, then the UE with the identifier 1 has an initial MCS value 22.

At operation 104, determining, based on the initial outer loop MCS value and an inner loop MCS value of the terminal, an initial MCS value of the terminal.

Specifically, the initial MCS value of a user UE is a sum of the inner loop MCS value and the initial outer loop MCS value. That is, initial MCS of UE with identifier *u* = inner loop MCS + initial outer loop MCS. Among them, the inner loop MCS value is determined by real-time channel quality of the UE, while the initial outer loop MCS value is obtained from experience and is typically a fixed value. In real-time scheduling, the UE scheduled MCS value is a sum of the inner loop MCS value and the outer loop MCS value. Among them, the inner loop MCS value is still determined by real-time channel quality of the UE, while the outer loop MCS value is gradually adjusted from the initial outer loop MCS according to block error rates (BLERs) of several times of data transmission by the UE. This implementation provides merely a method for obtaining an initial outer loop MCS, which can speed up the convergence of the initial outer loop MCS to the outer loop MCS. Compared with the existing art, by pre-counting distribution probabilities of different outer loop values of the N measurement parameters in each interval, and calculating, based on the distribution probabilities and the interval where the current N measurement parameters are currently located, a more appropriate initial outer loop MCS value in real time, the present embodiment enables the initial MCS value to be rapidly converged into a UE scheduled MCS value with a relatively low BLER.

A second implementation of the present application relates to a method for determining an initial MCS value. This implementation is substantially the same as the first implementation, except that before acquiring a target outer loop MCS value which enables a maximum sum of distribution probabilities of outer loop MCS values corresponding to the intervals where the N measurement parameters are currently located, the weighting coefficient of each measurement parameter is acquired.

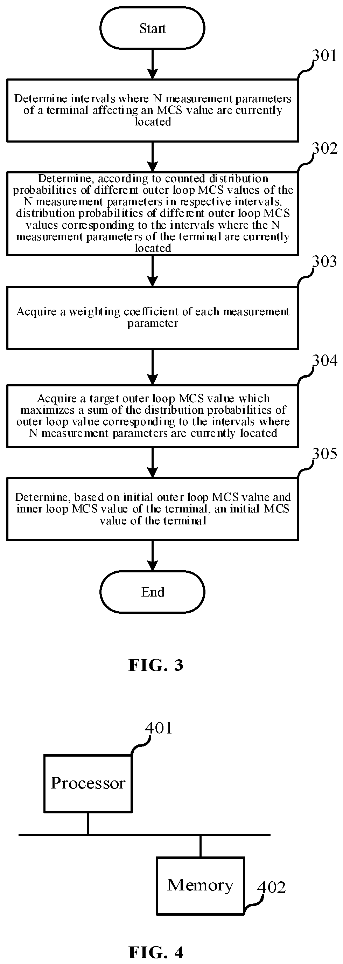

As shown in FIG. 3, the method for determining an initial MCS value according to the present implementation includes the following operations 301 to 305.

At operation 301, determining intervals where N measurement parameters of a terminal affecting a modulation and coding scheme (MCS) value are currently located.

At operation 302, determining, according to the counted distribution probabilities of different outer loop MCS values of the N measurement parameters in respective intervals, distribution probabilities of different outer loop MCS values corresponding to the intervals where the N measurement parameters of the terminal are currently located.

The operations 301 and 302 are similar to operations 101 and 102 in the first implementation of the present application, and details of the implementation have been specifically described in the first implementation of the present application, and thus are not repeated herein.

At operation 303, acquiring a weighting coefficient of each measurement parameter.

At operation 304, acquiring a target outer loop MCS value which maximizes a sum of distribution probabilities of weighted outer loop values corresponding to the intervals where the N measurement parameters are currently located.

Specifically, a default weighting coefficient of each measurement parameter is $\frac{1}{N}$, and the weighting coefficient of each measurement parameter in this implementation is ${w}_{{UE}_{u}^{t , i}}^{t , i}$, which is determined based on a number of samples in the interval where the measurement parameter is currently located and a total number of samples in the intervals where the N measurement parameters are currently located, where ${w}_{{UE}_{u}^{t , i}}^{t , i} = \frac{{N}_{{UE}_{u}^{t , i}}^{t , i}}{{\sum }_{i} {N}_{{UE}_{u}^{t , i}}^{t , i}}$. That is, the weighting coefficient equals to a number of samples in the interval where an MCS value measurement parameter arbitrarily specified by the UE is located divided by a total number of samples in the intervals where all MCS value measurement parameters of the UE are located. With such a weighting coefficient, the calculated initial outer loop MCS value can be more consistent with the scheduled samples, thereby avoiding statistical errors caused by too few samples of a certain measurement parameter and an initial outer loop MCS value of slow convergence. _{∘}

In an example, the target outer loop MCS value is determined by: $arg {max}_{m} \left({\sum }_{i = 0}^{1} \left({P}_{{UE}_{0}^{t , i} , m}^{t , i}\cdot {w}_{{UE}_{0}^{t , i}}^{t , i}\right)\right) = - 2 .$

In addition, the weighting coefficient is adjusted in real time through a parameter interface.

At operation 305, determining, based on the initial outer loop MCS value and an inner loop MCS value of the terminal, an initial MCS value of the terminal.

It should be noted that the above examples in the present implementation are given for convenience of understanding, and do not limit the technical solutions of the present application.

The operations of the above method are divided for the purpose of clarity, and in practice may be combined into one or further split, as long as the same logical relationship is included, which are all within the scope of the present patent. It is within the scope of the present application to add insignificant modifications or introduce insignificant designs to the algorithms or processes, but not to change core designs of the algorithms and processes.

A third implementation of the present application relates to an electronic device which, as shown in FIG. 4, includes
at least one processor 401; and a memory 402 communicatively connected to the at least one processor 401. The memory 402 stores thereon instructions executable by the at least one processor 401 so that when the instructions are executed by the at least one processor 402, the at least one processor 401 performs the method for determining an initial MCS according to the first implementation or second implementation of the present application.

The memory and the processor are connected via a bus. The bus may include any number of interconnected buses and bridges, and connect various circuits of one or more processors and the memory. The bus may further connect various other circuits such as peripherals, voltage regulators, power management circuits, and the like, which is well known in the art and thus will not be described further herein. A bus interface provides an interface between the bus and a transceiver. The transceiver may be one element or a plurality of elements, such as a plurality of receivers and transmitters, configured to provide a unit for communication with various other apparatuses over a transmission medium. The data processed by the processor is transmitted over a wireless medium through an antenna, which antenna further receives data and transmits the data to the processor.

The processor is responsible for management of the bus and general processing, and may further provide various functions including timing, peripheral interface, voltage regulation, power management, and other control functions. Meanwhile, the memory may be configured to store data used by the processor during operations.

A fourth implementation of the present application relates to a computer-readable storage medium with a computer program stored thereon. The computer program, when executed by a processor, causes the above method embodiments to be implemented.

In other words, those skilled in the art will appreciate that all or part of the operations in the methods according to the foregoing embodiments may be implemented by a program instructing related hardware, where the program is stored in a storage medium and includes several instructions to enable a device (which may be a micro controller unit, a chip, or the like) or a processor to perform all or part of the operations of the methods according to various embodiments of the present application. The storage medium mentioned before includes: a U disk, a mobile hard disk, a read-only memory (ROM), a random access memory (RAM), a disk or optical disk, and other media that can store a program code.

Compared with the existing art, in the implementation of the present application, an interval of each measurement parameter is obtained through interval division of a possible value range of the measurement parameter in advance, and distribution probabilities of different outer loop MCS values of the N measurement parameters in each interval are counted. Firstly, the intervals where N measurement parameters affecting the MCS value are currently located are determined, then based on the distribution probabilities, an initial outer loop MCS value of the terminal is calculated in real time, and then the initial MCS value is obtained from the inner loop MCS value of the terminal and the calculated initial outer loop value, so that a more appropriate initial MCS value is determined in the AMC process, the purpose of speeding up convergence of a UE scheduled MCS value is achieved, and a spectral efficiency of the system is improved.

It will be appreciated by those of ordinary skill in the art that the foregoing embodiments are specific examples of implementations of the present application, and that the scope of protection is defined by the attached claims.

## Claims

1. A method of determining an initial modulation and coding scheme, MCS, value, comprising:
determining intervals where N measurement parameters of a terminal affecting an MCS value are currently located, wherein each of the intervals of the measurement parameters is obtained through interval division of a possible value range of the measurement parameters in advance, and N is a natural number greater than 0;
counting, within a sliding time window of a preset length, a respective interval of each measurement parameter and a corresponding outer loop MCS value during each scheduling of all terminals to obtain a probability of an outer loop MCS value having any value when the measurement parameter belongs to any interval;
determining, according to the counted distribution probabilities of different outer loop MCS values of the N measurement parameters in respective intervals, distribution probabilities of different outer loop MCS values corresponding to the intervals where the N measurement parameters of the terminal are currently located;
acquiring a target outer loop MCS value which maximizes a sum of the distribution probabilities of the outer loop MCS values corresponding to the intervals where the N measurement parameters are currently located; and
taking the target outer loop MCS value as an initial outer loop MCS value of the terminal; and
determining, based on the initial outer loop MCS value and an inner loop MCS value of the terminal, an initial MCS value of the terminal.

2. The method of determining the initial MCS value according to claim 1, wherein each of the N measurement parameters corresponds to a weighting coefficient;
the acquiring the target outer loop MCS value which maximizes the sum of the distribution probabilities of the outer loop MCS values corresponding to the intervals where the N measurement parameters are currently located comprises:
acquiring the target outer loop MCS value which maximizes the sum of the distribution probabilities of weighted outer loop MCS values corresponding to the intervals where the N measurement parameters are currently located.

3. The method of determining the initial MCS value according to claim 2, wherein the weighting coefficient is adjusted in real time through a parameter interface.

4. The method of determining the initial MCS value according to claim 2, wherein the weighting coefficient corresponding to the measurement parameter is 1/N; or the weighting coefficient corresponding to the measurement parameter is determined based on a number of samples in the interval where the measurement parameter is currently located and a total number of samples in the intervals where the N measurement parameters are currently located.

5. The method of determining the initial MCS value according to any one of claims 1 to 4, wherein the N measurement parameters comprise one or any combination of: channel quality indication, a sounding reference signal, a signal to interference-plus-noise ratio, or beam forming.

6. The method of determining the initial MCS value according to any one of claims 1 to 4, wherein the determining, based on the initial outer loop MCS value and the inner loop MCS value of the terminal, the initial MCS value of the terminal comprises:
summing the initial outer loop MCS value and the inner loop MCS value of the terminal to obtain the initial MCS value of the terminal, wherein the inner loop MCS value is determined from real-time channel quality of the terminal.

7. An electronic device, comprising:
at least one processor; and
a memory communicatively connected to the at least one processor, wherein
the memory stores instructions executable by the at least one processor such that when the instructions are executed by the at least one processor, the at least one processor performs the method of determining the initial MCS value according to any one of claims 1 to 6.

8. A computer-readable storage medium storing a computer program, wherein the computer program, when executed by a processor, carries out the method of determining the initial MCS value according to claims 1 to 6.

## Patentansprüche

1. Verfahren zum Bestimmen eines anfänglichen Modulations- und Codierungsschema (MCS)-Werts, umfassend:
Bestimmen von Intervallen, in denen sich derzeit N Messparameter eines Endgeräts befinden, die einen MCS-Wert beeinflussen, wobei jedes der Intervalle der Messparameter durch Intervallteilung eines möglichen Wertebereichs der Messparameter im Voraus erhalten wird und N eine natürliche Zahl größer als 0 ist;
Zählen, innerhalb eines gleitenden Zeitfensters einer voreingestellten Länge, eines jeweiligen Intervalls jedes Messparameters und eines zugeordneten MCS-Werts der äußeren Schleife während jedes Einteilens aller Endgeräte, um eine Wahrscheinlichkeit zu erhalten, dass ein MCS-Wert der äußeren Schleife einen beliebigen Wert aufweist, wenn der Messparameter zu einem beliebigen Intervall gehört;
Bestimmen, gemäß den gezählten Verteilungswahrscheinlichkeiten unterschiedlicher MCS-Werte der äußeren Schleife der N Messparameter in jeweiligen Intervallen, von Verteilungswahrscheinlichkeiten unterschiedlicher MCS-Werte der äußeren Schleife, die den Intervallen zugeordnet sind, in denen sich derzeit die N Messparameter des Endgeräts befinden;
Erfassen eines Ziel-MCS-Werts der äußeren Schleife, der eine Summe der Verteilungswahrscheinlichkeiten der MCS-Werte der äußeren Schleife maximiert, die den Intervallen zugeordnet sind, in denen sich derzeit die N Messparameter befinden; und
Nehmen des Ziel-MCS-Werts der äußeren Schleife als einen anfänglichen MCS-Wert der äußeren Schleife des Endgeräts; und
Bestimmen, basierend auf dem anfänglichen MCS-Wert der äußeren Schleife und einem MCS-Wert der inneren Schleife des Endgeräts, eines anfänglichen MCS-Werts des Endgeräts.

2. Verfahren zum Bestimmen des anfänglichen MCS-Werts nach Anspruch 1, wobei jeder der N Messparameter einem Gewichtungskoeffizienten zugeordnet ist;
das Erfassen des Ziel-MCS-Werts der äußeren Schleife, der die Summe der Verteilungswahrscheinlichkeiten der MCS-Werte der äußeren Schleife maximiert, die den Intervallen zugeordnet sind, in denen sich derzeit die N Messparameter befinden, umfasst:
Erfassen des Ziel-MCS-Werts der äußeren Schleife, der die Summe der Verteilungswahrscheinlichkeiten gewichteter MCS-Werte der äußeren Schleife maximiert, die den Intervallen zugeordnet sind, in denen sich derzeit die N Messparameter befinden.

3. Verfahren zum Bestimmen des anfänglichen MCS-Werts nach Anspruch 2, wobei der Gewichtungskoeffizient in Echtzeit durch eine Parameterschnittstelle angepasst wird.

4. Verfahren zum Bestimmen des anfänglichen MCS-Werts nach Anspruch 2, wobei der Gewichtungskoeffizient, der dem Messparameter zugeordnet ist, 1/N ist; oder der Gewichtungskoeffizient, der dem Messparameter zugeordnet ist, basierend auf einer Anzahl von Abtastungen in dem Intervall, in dem sich derzeit der Messparameter befindet, und einer Gesamtanzahl von Abtastungen in den Intervallen, in denen sich derzeit die N Messparameter befinden, bestimmt wird.

5. Verfahren zum Bestimmen des anfänglichen MCS-Werts nach einem der Ansprüche 1 bis 4, wobei die N Messparameter eines oder eine beliebige Kombination umfassen von: Kanalqualitätsangabe, einem Sondierungsreferenzsignal, einem Signal-zu-Interferenz-plus-Rausch-Verhältnis oder Strahlformung.

6. Verfahren zum Bestimmen des anfänglichen MCS-Werts nach einem der Ansprüche 1 bis 4, wobei das Bestimmen, basierend auf dem anfänglichen MCS-Wert der äußeren Schleife und dem MCS-Wert der inneren Schleife des Endgeräts, des anfänglichen MCS-Werts des Endgeräts umfasst:
Summieren des anfänglichen MCS-Werts der äußeren Schleife und des MCS-Werts der inneren Schleife des Endgeräts, um den anfänglichen MCS-Wert des Endgeräts zu erhalten, wobei der MCS-Wert der inneren Schleife aus der Echtzeit-Kanalqualität des Endgeräts bestimmt wird.

7. Elektronisches Gerät, umfassend:
mindestens einen Prozessor; und
einen Speicher, der kommunikativ mit dem mindestens einen Prozessor verbunden ist, wobei
der Speicher Anweisungen speichert, die durch den mindestens einen Prozessor ausführbar sind, sodass, wenn die Anweisungen durch den mindestens einen Prozessor ausgeführt werden, der mindestens eine Prozessor das Verfahren zum Bestimmen des anfänglichen MCS-Werts nach einem der Ansprüche 1 bis 6 durchführt.

8. Computerlesbares Speichermedium, das ein Computerprogramm speichert, wobei das Computerprogramm, wenn es durch einen Prozessor ausgeführt wird, das Verfahren zum Bestimmen des anfänglichen MCS-Werts nach den Ansprüchen 1 bis 6 ausführt.

## Revendications

1. Procédé pour déterminer une valeur de schéma de modulation et de codage, MCS, initiale, comprenant les étapes suivantes :
déterminer des intervalles où N paramètres de mesure d'un terminal affectant une valeur MCS sont actuellement localisés, où chacun des intervalles des paramètres de mesure est obtenu par division d'intervalle d'une plage de valeurs possibles des paramètres de mesure à l'avance, et N est un nombre naturel supérieur à 0 ;
compter, dans une fenêtre temporelle glissante d'une longueur prédéfinie, un intervalle respectif de chaque paramètre de mesure et une valeur MCS de boucle externe correspondante pendant chaque planification de tous les terminaux pour obtenir une probabilité qu'une valeur MCS de boucle externe ait une valeur quelconque lorsque le paramètre de mesure appartient à un intervalle quelconque ;
déterminer, en fonction des probabilités de distribution comptées de différentes valeurs MCS de boucle externe des N paramètres de mesure dans des intervalles respectifs, des probabilités de distribution de différentes valeurs MCS de boucle externe correspondant aux intervalles où les N paramètres de mesure du terminal sont actuellement localisés ;
acquérir une valeur MCS de boucle externe cible qui maximise une somme des probabilités de distribution des valeurs MCS de boucle externe correspondant aux intervalles où les N paramètres de mesure sont actuellement localisés ; et
prendre la valeur MCS de boucle externe cible comme valeur MCS de boucle externe initiale du terminal ; et
déterminer, sur la base de la valeur MCS de boucle externe initiale et d'une valeur MCS de boucle interne du terminal, une valeur MCS initiale du terminal.

2. Procédé pour déterminer la valeur MCS initiale selon la revendication 1, dans lequel chacun des N paramètres de mesure correspond à un coefficient de pondération ;
acquérir la valeur MCS de boucle externe cible qui maximise la somme des probabilités de distribution des valeurs MCS de boucle externe correspondant aux intervalles où les N paramètres de mesure sont actuellement localisés comprend l'étape suivante :
acquérir la valeur MCS de boucle externe cible qui maximise la somme des probabilités de distribution de valeurs MCS de boucle externe pondérées correspondant aux intervalles où les N paramètres de mesure sont actuellement localisés.

3. Procédé pour déterminer la valeur MCS initiale selon la revendication 2, dans lequel le coefficient de pondération est ajusté en temps réel par l'intermédiaire d'une interface de paramètres.

4. Procédé pour déterminer la valeur MCS initiale selon la revendication 2, dans lequel le coefficient de pondération correspondant au paramètre de mesure est 1/N ; ou le coefficient de pondération correspondant au paramètre de mesure est déterminé sur la base d'un nombre d'échantillons dans l'intervalle où le paramètre de mesure est actuellement localisé et d'un nombre total d'échantillons dans les intervalles où les N paramètres de mesure sont actuellement localisés.

5. Procédé pour déterminer la valeur MCS initiale selon l'une quelconque des revendications 1 à 4, dans lequel les N paramètres de mesure comprennent un élément ou une combinaison quelconque des éléments suivants : une indication de qualité de canal, un signal de référence de sondage, un ratio signal sur interférence plus bruit, ou une formation de faisceau.

6. Procédé pour déterminer la valeur MCS initiale selon l'une quelconque des revendications 1 à 4, dans lequel déterminer, sur la base de la valeur MCS de boucle externe initiale et de la valeur MCS de boucle interne du terminal, la valeur MCS initiale du terminal comprend l'étape suivante :
sommer la valeur MCS de boucle externe initiale et la valeur MCS de boucle interne du terminal pour obtenir la valeur MCS initiale du terminal, où la valeur MCS de boucle interne est déterminée à partir de la qualité de canal en temps réel du terminal.

7. Dispositif électronique, comprenant :
au moins un processeur ; et
une mémoire connectée de manière communicative à l'au moins un processeur, dans lequel
la mémoire stocke des instructions exécutables par l'au moins un processeur de sorte que, lorsque les instructions sont exécutées par l'au moins un processeur, l'au moins un processeur réalise le procédé pour déterminer la valeur MCS initiale selon l'une quelconque des revendications 1 à 6.

8. Moyen de stockage lisible par ordinateur stockant un programme informatique, dans lequel le programme informatique, lorsqu'il est exécuté par un processeur, réalise le procédé pour déterminer la valeur MCS initiale selon les revendications 1 à 6.
